# EUROPEAN PATENT APPLICATION

(11) **EP 2 566 002 A2**
(43) Date of publication of application: **06.03.2013**
(21) Application number: 12182208.4
(22) Date of filing: 29.08.2012
(51) Int. Cl.: H02J 3/00, H02J 13/00

(54) **Analytical and combinatorial fault restoration**

(30) Priority: 29.08.2011 US 201113219909
(71) Applicant: General Electric Company, Schenectady, NY 12345 (US)
(72) Inventor: Kang, Taehyen, Atlanta, GA Georgia 30339 (US); San Andres, Ramon Juan, Atlanta, GA Georgia 30339 (US); Fan, Hua, Atlanta, GA Georgia 30339 (US); Lewkovich, Robert Michael, Atlanta, GA Georgia 30339 (US)
(74) Representative: Picker, Madeline Margaret

(57) **Abstract**

Embodiments of the invention can provide systems and methods for combining analytical and combinatorial processes to compute fault restoration of a dead load area. According to one embodiment of the invention, a system can be provided. The system can be operable to receive location and switch information associated with an area of a power grid that has lost power, identify a switch within an area of the power grid that has lost power, compute an alternative source capacity (ASC) value for the identified switch, identify and open at least one second switch, compute combinations of the switch with each second switch that satisfies a rule, eliminate redundant switch open or close operations prior to the computation of the dead load area restoration plan, and compute a restoration plan based at least in part on the computed combinations.

## Description

### BACKGROUND OF THE INVENTION

Embodiments of the invention relate generally to fault restoration, and more particularly to combinations of analytical and combinatorial fault restoration.

Utility companies and other distribution network services are often faced with power outages caused by a myriad of issues. Power outages, or faults, may be caused by storms, overuse, or malfunctioned equipment. However, restoring faults generally either requires extensive computational power or results in incomplete or inaccurate solutions. Further, governing bodies may only provide licenses to utility companies that comply with reliability standards. As power outages continue to occur and reliability standards of governing bodies continue to increase, finding ways to restore faults remains a priority.

### BRIEF DESCRIPTION OF THE INVENTION

Some or all of the above needs and/or problems may be addressed by certain embodiments of the invention. Disclosed embodiments may include combining analytical and combinatorial systems and methods to restore faults. According to one embodiment of the invention, there is disclosed a system operable to receive location and switch information associated with an area of a power grid that has lost power, identify a switch within an area of the power grid that has lost power, compute an alternative source capacity (ASC) value for the identified switch, identify and open at least one second switch, compute combinations of the switch with each second switch that satisfies a rule, eliminate redundant switch open or close operations prior to the computation of the dead load area restoration plan, and compute a restoration plan based at least in part on the computed combinations.

According to another embodiment of the invention, there is disclosed a method for receiving location and switch information associated with an area of a power grid that has lost power, identifying a switch within an area of the power grid that has lost power, computing an alternative source capacity (ASC) value for the identified switch, identifying and opening at least one second switch, computing combinations of the switch with each second switch that satisfies a rule, eliminating redundant switch open or close operations prior to the computation of the dead load area restoration plan, and computing a restoration plan based at least in part on the computed combinations.

Further, according to another embodiment of the invention, there is disclosed one or more computer-readable media storing instructions for receiving, from a distribution network, location and switch information associated with a dead load area, identifying, by at least one processor, a switch within the dead load area, computing an alternative source capacity (ASC) value for the identified switch, identifying and opening at least one pseudo-switch that satisfies a power balance equation, computing combinations of the switch with each pseudo-switch that satisfies a rule comprising at least one of maximizing a number of customers affected or meeting a power balance equation, eliminating redundant switch open or close operations, and computing a dead load area restoration plan based at least in part on the computed combinations.

Other embodiments, aspects, and features of the invention will become apparent to those skilled in the art from the following detailed description, the accompanying drawings, and the appended claims.

### BRIEF DESCRIPTION OF THE DRAWINGS

Reference will now be made to the accompanying drawings, which are not necessarily drawn to scale, and wherein:
FIG. 1 is a block diagram of a computer environment showing an illustrative system with which analytical and combinatorial fault restoration may be implemented, according to an embodiment of the invention.
FIG. 2 is a flow diagram illustrating details of an example method for implementing analytical and combinatorial fault restoration, according to an embodiment of the invention.
FIG. 3 is a flow diagram illustrating details of another example method for implementing analytical and combinatorial fault restoration, according to another embodiment of the invention.

### DETAILED DESCRIPTION OF EMBODIMENTS OF THE INVENTION

Illustrative embodiments of the invention will now be described more fully hereinafter with reference to the accompanying drawings, in which some, but not all embodiments of the invention are shown. The invention may be embodied in many different forms and should not be construed as limited to the embodiments set forth herein; rather, these embodiments are provided so that this disclosure will satisfy applicable legal requirements. Like numbers refer to like elements throughout.

Illustrative embodiments of the invention are directed to, among other things, restoring power to a grid after a fault by utilizing a combination of analytical and combinatorial systems and methods. In some aspects, in particular, illustrative embodiments of the invention may be directed towards restoring faulted areas based on different restoration metrics, such as, but not limited to, a number of customers, a number of circuits, an amount of power requested, etc. As an overview, utility companies or other electricity providers generate and/or provide electricity to a grid. The grid may provide electricity to customers who consume the electricity or to other utility companies. Additionally, grids generally include switches, or relays, for connecting grid components. When a switch is closed, electricity (when provided) may flow through the connection. When open, electricity does not pass through the switch.

In some embodiments, a tie-switch is a switch that connects one circuit to another circuit. Generally, tie-switches remain open during normal circuit operations. Additionally, in some aspects, a trunk is an electrical path which is the shortest path between two, and only two, tie-switches, and a branch is a spur stemming from a trunk. By way of example only, a branch may not connect its end to another trunk; rather it may end by itself or with a device such as a load or switch. In some aspects, a branch may have its own spurs.

Further, in some embodiments, an alternative source may be a switch that is operated open under normal conditions, and may be closed in order to provide power to a dead load area. Generally, a dead load area is an area between a downstream isolation switch and its tie-switches that is without power. An isolation switch is a switch that can minimally isolate a faulted area either downstream or upstream. Further, an alternative source capacity (ASC) is an amount of power an alternative source switch can supply in kilowatts (kW), or described as one thousand amperes of current passing through an electrical potential difference of one volt (i.e., kVA).

In some aspects, analytical systems and methods may include analyzing, based on a set of methods and/or procedures, possible switches to open or close that may lead to fault restoration. Additionally, these analytical systems and methods may institute predefined rules about switches. For example, in some aspects, a switch may be opened in after an available ASC for the switch is determined. Contrastingly, in some aspects, combinatorial systems and methods may include computing combinations of switches to be opened prior to changing the state of any switches. As such, extensive computational power may be utilized by a combinatorial method, as many combinations must be computed.

The technical effects of embodiments of the invention may include computing fault restoration plans for utility providers and/or other distribution network services, such as, but not limited to, television providers, internet providers, mobile phone network providers, etc. In addition, improved speed for computing fault restorations may be achieved.

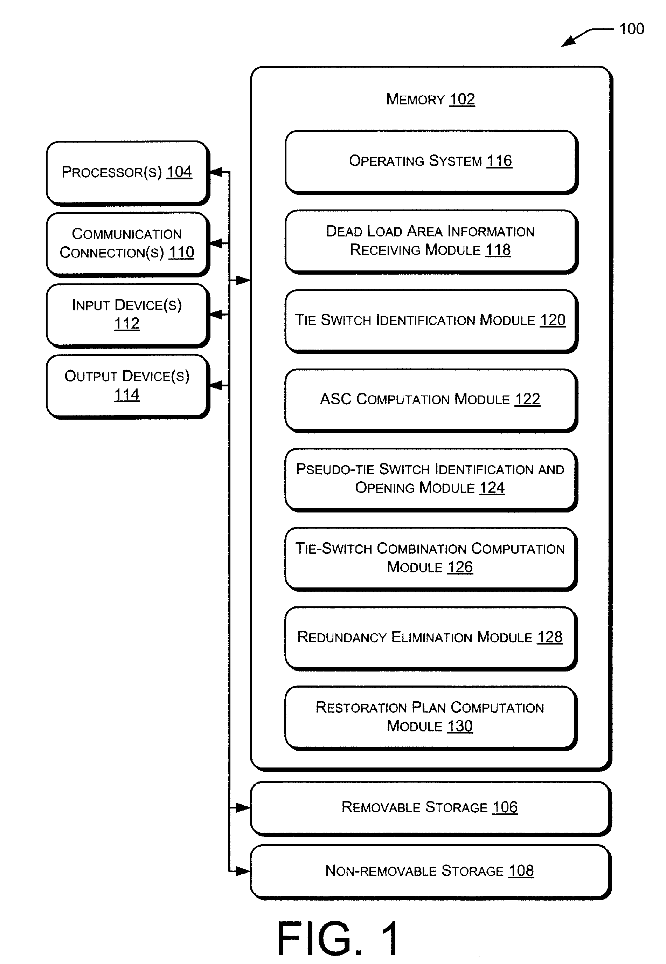

FIG. 1 provides an illustrative overview of one computing device 100, in which aspects and features disclosed herein may be implemented. The computing device 100 may be configured as any suitable computing device capable of implementing the disclosed features, and accompanying methods, such as, but not limited to, those described with reference to FIG. 1. By way of example and not limitation, suitable computing devices may include personal computers (PCs), servers, server farms, data centers, or any other device capable of storing and executing all or part of the disclosed features.

In one illustrative configuration, the computing device 100 comprises at least a memory 102 and one or more processing units (or processor(s)) 104. The processor(s) 104 may be implemented as appropriate in hardware, software, firmware, or combinations thereof. Software or firmware implementations of the processor(s) 104 may include computer-executable or machine-executable instructions written in any suitable programming language to perform the various functions described.

Memory 102 may store program instructions that are loadable and executable on the processor(s) 104, as well as data generated during the execution of these programs. Depending on the configuration and type of computing device 100, memory 102 may be volatile (such as random access memory (RAM)) and/or non-volatile (such as read-only memory (ROM), flash memory, etc.). The computing device or server may also include additional removable storage 106 and/or non-removable storage 108 including, but not limited to, magnetic storage, optical disks, and/or tape storage. The disk drives and their associated computer-readable media may provide non-volatile storage of computer-readable instructions, data structures, program modules, and other data for the computing devices. In some implementations, the memory 102 may include multiple different types of memory, such as static random access memory (SRAM), dynamic random access memory (DRAM), or ROM.

Memory 102, removable storage 106, and non-removable storage 108 are all examples of computer-readable storage media. For example, computer-readable storage media may include volatile and non-volatile, removable and non-removable media implemented in any method or technology for storage of information such as computer-readable instructions, data structures, program modules or other data. Memory 102, removable storage 106, and non-removable storage 108 are all examples of computer storage media. Additional types of computer storage media that may be present include, but are not limited to, programmable random access memory (PRAM), SRAM, DRAM, RAM, ROM, electrically erasable programmable read-only memory (EEPROM), flash memory or other memory technology, compact disc read-only memory (CD-ROM), digital versatile discs (DVD) or other optical storage, magnetic cassettes, magnetic tape, magnetic disk storage or other magnetic storage devices, or any other medium which can be used to store the desired information and which can be accessed by the server or other computing device. Combinations of the any of above should also be included within the scope of computer-readable media.

Alternatively, computer-readable communication media may include computer-readable instructions, program modules, or other data transmitted within a data signal, such as a carrier wave, or other transmission. However, as used herein, computer-readable storage media does not include computer-readable communication media.

The computing device 100 may also contain communications connection(s) 110 that allow the computing device 100 to communicate with a stored database, another computing device or server, user terminals, and/or other devices on a network. The computing device 100 may also include input device(s) 112 such as a keyboard, mouse, pen, voice input device, touch input device, etc., and output device(s) 114, such as a display, speakers, printer, etc.

Turning to the contents of the memory 102 in more detail, the memory 102 may include an operating system 116 and one or more application programs or services for implementing the features disclosed herein including a dead load area information receiving module 118. The dead load area information receiving module 118 may be configured to receive data regarding the parameters of a dead load area, such as, but not limited to, the location of the dead load, a number of affected customers, a number and/or type of switches within the dead load, and alternative sources proximate to the dead load. Additionally, the dead load area information receiving module 118 may also store the dead load area information in memory 102. In one aspect, the dead load area information receiving module 118 may receive the dead load area data from a circuit, switch, or controller of or near the dead load area. However, in other aspects, the dead load area information receiving module 118 may receive the dead load area information from a utility provider or other distribution network service provider.

The memory 102 may further include a tie-switch identification module 120 and an ASC computation module 122. The tie-switch identification module 120 may be configured to identify one, more, or all tie-switch(es) within an identified dead load area. As noted, in some aspects, each tie-switch within a dead load area may be identified. However, in other aspects, only tie-switches within a portion of the entire dead load area may be identified. Additionally, the ASC computation module 122 may be configured to compute an ASC value for one identified tie-switch, each identified tie-switch, or a subset of all the identified tie-switches. In some aspects, the ASC computation module 122 may compute the ASC values based on current operating conditions of circuits adjacent to the identified tie-switch(es). This may be achieved through a distribution power flow study or other tool for providing ASC values. As noted above, an ASC value may be defined as the amount of power, in kWs or kVAs, that an alternative source switch (e.g., a switch that connects a non-dead load area) can supply.

Additionally, the memory 102 may include a pseudo-tie-switch identification and opening module 124. In one aspect, the pseudo-tie-switch identification and opening module 124 may be configured to identify pseudo-tie-switches. In at least one non-limiting example, the pseudo-tie-switch identification and opening module 124 may restore as much power as possible on the trunk of each tie-switch identified by the tie-switch identification module 120 by tracing from the identified tie-switch towards an isolation switch. The pseudo-tie-switch identification and opening module 124 may then open a switch in the dead load area that will restore the most loads subject to the available ASC of the identified tie-switch.

In some aspects, this opened tie-switch may be identified as a pseudo-tie-switch (PTS) replacing the identified tie-switch with a new ASC computed by the difference between the original ASC of the identified tie-switch and the sum of loads between the previously identified tie-switch and the PTS. Additionally, in some aspects, the PTS selected must be satisfied by an ASC check (i.e., meeting a power balance equation) and user-defined rules, such as, but not limited to, requesting that the PTS be telecontrollable with suitable communications quality unless manual switches are allowed, that the PTS not have tags attached, that the PTS be remotely controllable, etc. In some aspects, if the pseudo-tie-switch identification and opening module 124 determines that the selected PTS does not meet the predefined criteria, the pseudo-tie-switch identification and opening module 124 may trace backwards to a prior switch to find a PTS that does meet the criteria. Further, in some aspects, the pseudo-tie-switch identification and opening module 124 may eventually define a dead load area confined by selected PTSs.

The memory 102 may also include a tie-switch combination computation module 126. In one aspect, the tie-switch combination computation module 126 may be configured to compute one or more tie-switch combinations for determining a fault restoration plan. By way of example only, a tie-switch combination computation module 126 may compute combinations of switch openings, within the newly defined dead load area confined by selected PTSs, that could be used to shed the dead load found between the isolation switch and the PTSs. In some aspects, every possible combination may be computed. Additionally, in some aspects, only valid combinations (i.e., combinations that shed the dead load, meet the power balance equation, and/or meet user-defined rules) are computed. In some aspects, the tie-switch combination computation module 126 may compute the combinations by pruning branches in the new dead load area by selecting switches to be opened such that the selection of the switch maximizes a restoration metric (e.g., a maximum number of customers), meets the power balance equation, and/or meets the predefined user-selected criteria utilized by the pseudo-tie-switch identification and opening module 124.

Additionally, the memory 102 may further include a redundancy elimination module 128 and a restoration plan computation module 130. In one aspect, the redundancy elimination module 128 may be configured to eliminate redundant open/close switch operations. That is, in one non-limiting example, if the tie-switch combination computation module 126 performs a close operation on a PTS created by an open operation of the pseudo-tie-switch identification and opening module 124, this set of operations (i.e., the opening and the closing of the same tie-switch) may be eliminated. Further, the restoration plan computation module 130 may be configured to compute and/or determine a restoration plan once one or more redundant open/close operations are eliminated by the redundancy elimination module 128. In some aspects, the analytical methods of the pseudo-tie-switch identification and opening module 124, the combinatorial method of the tie-switch combination computation module 126, and the simplification method of the redundancy elimination module 128 may be applied sequentially to reduce a majority of possible combinations for which distribution power flow studies may be executed and restore more loads based on given restoration metrics.

Various instructions, methods and techniques described herein may be considered in the general context of computer-executable instructions, such as program modules, executed by one or more computers or other devices. Generally, program modules include routines, programs, objects, components, data structures, etc., for performing particular tasks or implementing particular abstract data types. These program modules and the like may be executed as native code or may be downloaded and executed, such as in a virtual machine or other just-in-time compilation execution environment. Typically, the functionality of the program modules may be combined or distributed as desired in various embodiments. An implementation of these modules and techniques may be stored on some form of computer-readable storage media.

The example computing device 100 shown in FIG. 1 is provided by way of example only. Numerous other operating environments, system architectures, and device configurations are possible. Accordingly, embodiments of the present disclosure should not be construed as being limited to any particular operating environment, system architecture, or device configuration.

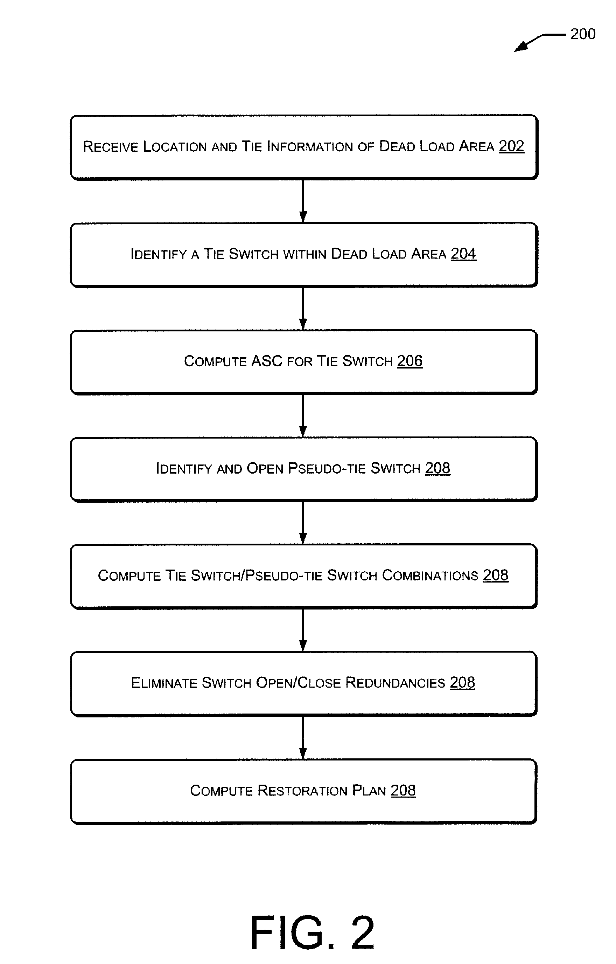

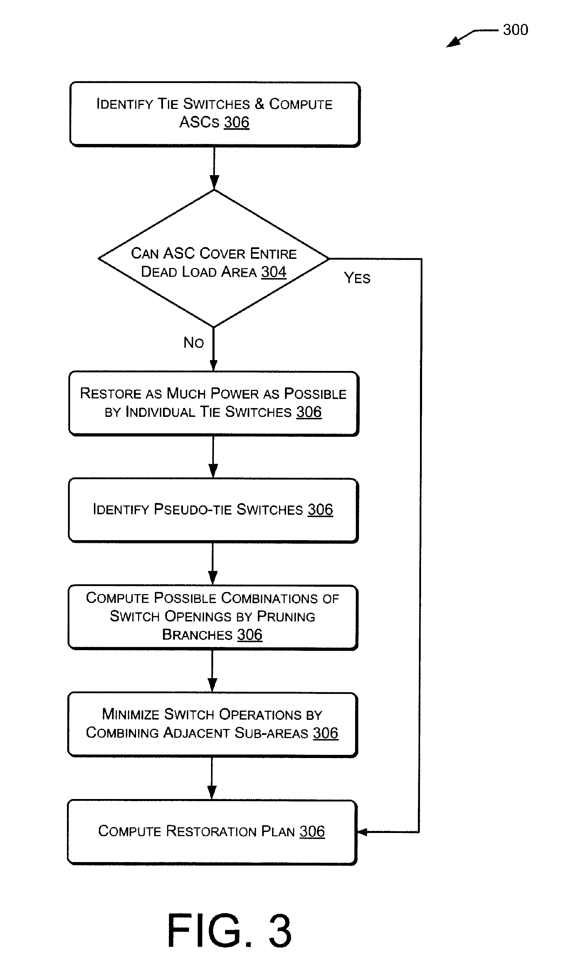

FIGS. 2 and 3 are flow diagrams of illustrative processes 200 and 300 for implementing analytical and combinatorial fault restoration, respectively, as described with reference to FIG. 1. These processes are illustrated as logical flow diagrams, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the process.

FIG. 2 illustrates an example flow diagram of process 200 for implementing analytical and combinatorial fault restoration, as discussed above. In one example, the illustrative computing device 100 and/or one or more modules 118-130 of the illustrative computing device 100, alone or in combination, may perform the described operations of process 200.

In this particular implementation, the process 200 may begin at block 202 of FIG. 2 in which the process 200 may receive location and switch information of a dead load area. In this example, the process 200 may receive data regarding parameters of a dead load area, such as, but not limited, to the location of the dead load, a number of affected customers, a number and/or type of switches within the dead load area, and alternative sources proximate to the dead load area. Additionally, the process 200 may also store the information at block 202 as well. In one aspect, the information may be received from a circuit, switch, or controller of or near the dead load area. However, in other aspects, the process 200 may receive the dead load area information from a utility provider or other distribution network service provider

At block 204, the process 200 may identify a switch (such as a tie-switch) within the dead load area. As noted above, identifying a switch may include identifying one, more, or all tie-switch(es) within an identified dead load area. Additionally, in some aspects, each tie-switch within a dead load area may be identified. However, in other aspects, only tie-switches within a portion of the entire dead load area may be identified.

At block 206, the process 200 may compute an ASC value for one or more of the identified tie-switches. In this example, the process 200 may compute an ASC value for one identified tie-switch, each identified tie-switch, or a subset of all the identified tie-switches. In some aspects, the process 200 may compute the ASC values based on current operating conditions of circuits adjacent to the identified tie-switch(es). This may be achieved through a distribution power flow study or other tool for providing ASC values. As noted above, an ASC value may be defined as the amount of power, in kWs or kVAs, that an alternative source switch (e.g., a switch that connects a non-dead load area) can supply.

At block 208, the process 200 may identify and open pseudo-tie-switches. As noted above, in some aspects, the process 200 may restore as much power as possible on the trunk of each tie-switch identified by the tie-switch identification module 120 of FIG. 1 by tracing from the identified tie-switch towards an isolation switch. The process 200 may then open a switch in the dead load area that will restore the most loads subject to the available ASC of the identified tie-switch. In some aspects, this opened tie-switch may be identified as a pseudo-tie-switch (PTS) replacing the identified tie-switch with a new ASC computed by the difference between the original ASC of the identified tie-switch and the sum of loads between the previously identified tie-switch and the PTS. Additionally, in some aspects, the PTS selected must be satisfied by an ASC check (i.e., meeting a power balance equation) and user-defined rules, such as, but not limited to requesting that the PTS be telecontrollable with suitable communications quality unless manual switches are allowed, that the PTS not have tags attached, that the PTS be remotely controllable, etc. In some aspects, if the process 200 determines that the selected PTS does not meet the predefined criteria, the process 200 may trace backwards to a prior switch to find a PTS that does meet the criteria. Further, in some aspects, the process 200 may eventually define a dead load area confined by selected PTSs at block 208.

Additionally, the process 200 may compute tie-switch/pseudo-tie-switch combinations at block 210. In some aspects, the process 200 may compute combinations of switch openings, within the newly defined dead load area confined by selected PTSs, that could be used to shed the dead load found between the isolation switch and the PTSs. In some aspects, every possible combination may be computed. Additionally, in some aspects, only valid combinations (i.e., combinations that shed the dead load, meet the power balance equation, and/or meet user-defined rules) may be computed. In some aspects, the process 200 may compute the combinations by pruning branches in the new dead load area by selecting switches to be opened such that the selection of the switch maximizes a restoration metric (e.g., a maximum number of customers), meets the power balance equation, and/or meets the predefined user-selected criteria utilized at block 208.

In some aspects, at block 212, the process 200 may eliminate switch open/close operation redundancies. Further, at block 214, the process 200 may compute a restoration plan based at least in part on the operations performed at blocks 202-212.

FIG. 3 illustrates an example flow diagram of process 300 for implementing other aspects of analytical and combinatorial fault restoration, as discussed above. In one example, the illustrative computing device 100 and/or one or more modules 118-130 of the illustrative computing device 100, alone or in combination, may perform the described operations of process 300.

In this particular implementation, the process 300 may begin at block 302 of FIG. 3 in which the process 300 may identify one or more switches (e.g., tie-switches) and compute their respective ASC values. Further, at decision block 304, the process 300 may determine whether the computed ASC values can cover the entire dead load area. If so, the process 300 may terminate by computing a restoration plan at block 306. In this example, the restoration plan computed at block 306 may be based at least in part on the identified switches and their respectively computed ASC values.

However, if the process 300 determines at decision block 304 that the identified switches cannot cover the entire dead load area, the process may restore as much power as possible by individual tie-switches at block 308. At block 310, the process 300 may then identify pseudo-tie switches that satisfy certain predefined rules. At block 312, the process 300 may compute possible combinations of switch openings by pruning branches. The process 300 may then minimize switch operations by combining adjacent sub-areas at block 314. Finally, at block 306, the process may terminate by computing a restoration plan based at least in part on the information received, identified, and/or computing during blocks 308-314 of process 300.

Illustrative methods and systems of implementing analytical and combinatorial fault restoration are described above. Some or all of these systems and methods may, but need not, be implemented at least partially by architectures such as those shown in FIG. 1 above.

Although embodiments have been described in language specific to structural features and/or methodological acts, it is to be understood that the disclosure is not necessarily limited to the specific features or acts described. Rather, the specific features and acts are disclosed as illustrative forms of implementing the embodiments.

## Claims

1. A system, comprising:
at least one memory (102) that stores computer-executable instructions;
at least one processor (100) configured to access the at least one memory (102), wherein the at least one processor (104) is configured to execute the computer-executable instructions to:
identify, by the at least one processor (104), a switch (120, 124) within an area of a power grid that has lost power;
compute an alternative source capacity (ASC) (122) value for the identified switch (120, 124);
identify and open at least one second switch (120, 124);
compute combinations of the switch (120, 124) with each of the at least one second switch (120, 124) that satisfy a rule; and
compute a restoration plan (130) based at least in part on the computed combinations.

2. The system of claim 1, wherein the at least one processor (104) is further configured to execute the computer-executable instructions to receive, from a distribution network, location and switch (120, 124) information associated with the area of the power grid that has lost power.

3. The system of claim 1 or claim 2, wherein the ASC (122) value for the identified switch (120, 124) is computed based at least in part on an operating condition of at least one circuit adjacent to the identified switch (120, 124).

4. The system of claim 3, wherein the ASC (122) value for the identified switch (120, 124) is further computed based at least in part on information received from an algorithm for determining power flows within the power grid.

5. The system of any one of claims 1 to 4, wherein the at least one second switch (120, 124) is identified by tracing from the identified switch (120, 124) towards an isolation switch (120, 124) of the area of the power grid that has lost power and identifying an additional switch (120, 124) that, when opened, restores a load (118) to the power grid that is within the computed ASC (122) of the identified switch (120, 124).

6. The system of claim 5, wherein the ASC (122) value for the identified switch (120, 124) is replaced with a second ASC (122) value comprising a difference between the ASC (122) value for the identified switch (120, 124) and a sum of loads (118) between the ASC (122) value for the identified switch (120, 124) and an ASC (122) value for the at least one second switch (120, 124).

7. The system of any preceding claim, wherein the at least one second switch (120, 124) satisfies a power balance equation.

8. The system of any preceding claim, wherein the combinations are computed based at least in part on determining a switch (120, 124) that, when opened, powers an area of the power grid that has lost power between an isolation switch (120, 124) and the at least one second switch (120, 124).

9. The system of claim 8, wherein determining a switch (120, 124) that, when opened, powers an area of the power grid that has lost power between an isolation switch (120, 124) and the at least one pseudo-switch (124) comprises pruning a branch in the dead load area (118), and wherein the rule comprises at least one of maximizing a number of customers affected or meeting a power balance equation.

10. The system of any preceding claim, wherein the at least one processor (100 is further configured to execute the computer-executable instructions to eliminate redundant switch (128) open or close operations prior to the computation of the dead load area (118) restoration plan (130).

11. A method, comprising:
identifying, by the at least one processor (104), a switch (120, 124) within a dead load area of a power grid;
computing an alternative source capacity (ASC) value for the identified switch (120, 124);
identifying and opening at least one pseudo-switch;
computing combinations of the switch (120, 124) with each of the at least one pseudo-switch that satisfy a rule; and
computing a dead load area restoration plan (130) based at least in part on the computed combinations.

12. The method of claim 11, further comprising receiving, from a distribution network, location and switch information associated with the dead load area (118).

13. The method of claim 11 or claim 12, wherein the identifying of the at least one pseudo- switch comprises tracing from the identified switch towards an isolation switch of the dead load area and identifying an additional switch that, when opened, restores a load to the power grid that is within the computed ASC of the identified switch, wherein, preferably, the ASC value for the identified switch is replaced with a new ASC value comprising a difference between the ASC value for the identified switch and a sum of loads between the ASC value for the identified switch and an ASC value for the at least one pseudo-switch (124).

14. The method of claim 11, 12 or 13, wherein the at least one pseudo-switch (124) satisfies a power balance equation.

15. The method of any one of claims 11 to 14, wherein the computing of the combinations comprises determining a switch that, when opened, powers a dead load area between an isolation switch and the at least one pseudo-switch (124), and, preferably, determining a switch that, when opened, powers a dead load area between an isolation switch, and the at least one pseudo-switch comprises pruning a branch in the dead load area, and wherein the rule comprises at least one of maximizing a number of customers affected or meeting a power balance equation.

16. The method of any one of claims 11 to 15, further comprising eliminating redundant switch (128) open or close operations prior to computing the dead load area restoration plan (130).
